# EUROPÄISCHE PATENTSCHRIFT

(11) **EP 3 821 699 B1**
(45) Veröffentlichungstag und Bekanntmachung des Hinweises auf die Patenterteilung: **07.06.2023**
(21) Anmeldenummer: 20207330.0
(22) Anmeldetag: 12.11.2020
(51) Int. Cl.: A01G 9/04, A01G 9/14, G07F 11/00, G07F 11/16, G07F 11/38, G07F 11/62, G07F 11/64, G07F 17/00

(54) **KULTURRINNE ZUR AUFNAHME UND ANZUCHT VON PFLANZEN, INSBESONDERE NUTZ- ODER ZIERPFLANZEN WIE SALATE, GEMÜSE, BLUMEN UND DERGLEICHEN, SOWIE AUTOMAT UND ANLAGE MIT MINDESTENS EINER SOLCHEN KULTURRINNE**
CULTIVATION GUTTER FOR RECEIVING AND CULTIVATING PLANTS, SUCH AS SALADS, VEGETABLES, FLOWERS AND THE LIKE, VENDING MACHINE AND INSTALLATION COMPRISING SUCH A CULTIVATION GUTTER
GOULOTTE DE CULTURE POUR LA RÉCEPTION ET LA CULTURE DE PLANTES, TELLES QUE SALADES, LÉGUMES, FLEURS ET SIMILAIRES, AUTOMATE ET INSTALLATION COMPRENANT UNE TELLE GOULOTTE DE CULTURE

(30) Priorität: 12.11.2019 DE 102019130537
(43) Veröffentlichungstag der Anmeldung: 19.05.2021
(73) Patentinhaber: Haubner, Jochen Friedrich, 90427 Nürnberg (DE)
(72) Erfinder: Haubner, Jochen Friedrich, 90427 Nürnberg (DE)
(74) Vertreter: Kurz, Andreas

(56) Entgegenhaltungen:
- ES-U- 1 058 128
- FR-A1- 2 912 873
- KR-Y1- 200 465 857

## Beschreibung

Die Erfindung betrifft eine Kulturrinne zur Aufnahme und Anzucht von Pflanzen, insbesondere Nutz- oder Zierpflanzen wie Salate, Gemüse, Blumen und dergleichen, sowie einen Automaten und eine Anlage mit mindestens einer solchen Kulturrinne.

Im Zusammenhang mit der Anzucht von Nutzpflanzen in Gewächshäusern und in Freilandkulturen sind Kulturrinnen bekannt, in denen Nutzpflanzen bei ausreichender Bewässerung in einem Pflanzsubstrat bis zu ihrem Verkauf gezogen werden. In der DE 38 39 664 A1 ist beispielsweise eine Kulturrinne beschrieben, die über ihre Länge eine Vielzahl Pflanzentöpfe mit darin wachsenden Nutzpflanzen aufnimmt. Die Bewässerung und Düngung erfolgt über den unteren Teil der Kulturrinne, der aufgrund seiner Neigung in Längsrichtung als Gerinne dient. Die Entnahme der Nutzpflanze aus der Kulturrinne geschieht ausschließlich von oben. Der ausschließlich von oben mögliche Zugang beschränkt jedoch den Einsatzbereich derartiger Kulturrinnen, vor allem wenn mehrere Kulturrinnen übereinander angeordnet werden sollen, beispielsweise im Rahmen des "vertical farming".

Die ES1058128U offenbart eine Kulturrinne für hydroponische Kultursysteme.

Ein Automaten zum verkaufsbereiten Offerieren von Waren ist beispielsweise aus der DE 20 2018 004 258 U1 bekannt und setzt voraus, dass die Ware in abgepacktem Zustand vorliegt. Ein Verkauf vor allem frischer unverpackter oder teilverpackter Pflanzen wie zum Beispiel Salate, Gemüse oder Blumen ist mit derartigen Automaten nicht möglich. Zum einen würden Lebensmittel in derartigen Automaten schnell welk, was potentielle Käufer aufgrund der damit verbundenen Qualitätseinbußen vom Kauf abhält. Vor diesem Hintergrund liegt der Erfindung die Aufgabe zugrunde, eine Kulturrinne zur Aufnahme und Anzucht von Pflanzen anzugeben, die sich für einen breiteren Einsatzbereich eignet, insbesondere für einen Einsatz mit erhöhtem Automatisierungsgrad bis zur Entnahme der Pflanze oder bei geringem Raumangebot wie beispielsweise in Verkaufsautomaten und Gewächshäuser.

Diese Aufgabe wird durch eine Kulturrinne mit den Merkmalen des Anspruchs 1, einem Automaten mit den Merkmalen des Anspruchs 13 und einer Anlage mit den Merkmalen des Anspruchs 14 gelöst.

Vorteilhafte Ausführungsformen ergeben sich aus den Unteransprüchen.

Eine erfindungsgemäße Kulturrinne zeichnet sich durch einen konstruktiven Aufbau aus, der eine Zugänglichkeit zu den Aufnahmen für die Pflanzen im Gegensatz zum Stand der Technik nicht von oben, sondern von der Seite her gestattet. Darunter wird gemäß der Erfindung eine Richtung quer zur Schwerkraftrichtung verstanden wird, insbesondere horizontal oder im Wesentlichen horizontal. Dies wird erreicht, indem eine erfindungsgemäße Kulturrinne entlang einer ihrer Längsseiten derart offen ausgebildet ist, dass ein Arbeiter oder ein Greifer eines Automaten eine Pflanze von der Seite in eine Aufnahme einsetzen bzw. herausnehmen kann. Die offene Längsseite der Kulturrinne ist also frei von Teilen die den Zugriff von der offenen Längsseite her verhindern würden. Das eröffnet die Möglichkeit, erfindungsgemäße Kulturrinnen auch übereinander anordnen zu können, ohne die Zugänglichkeit zu den Aufnahmen zu erschweren. Auf diese Weise lassen sich erfindungsgemäße Kulturrinnen verhältnismäßig dicht anordnen mit dem Vorteil, ein vorhandenes Raumangebot optimal nutzen zu können. Dieser Vorteil kommt beispielsweise beim "vertical farming" in Gebäuden oder Gewächshäusern besonders zum Tragen oder beim Bereitstellen frischer Ware zum Verkauf in Verkaufsautomaten, wo das Raumangebot begrenzt ist. Zusammen mit der Möglichkeit das Einsetzen der Pflanzen in die Kulturrinne bzw. deren Entnahme zu automatisieren, lässt sich dank der Erfindung die Anzucht bzw. das Offerieren von Pflanzen äußerst effizient und wirtschaftlich bewerkstelligen.

Die Aufnahmen einer erfindungsgemäßen Kulturrinne sind an räumlich vorbestimmter Stelle an einem im Gebrauchszustand horizontal oder im Wesentlichen horizontal verlaufenden Halteboden angeordnet und damit allein durch Ausführen einer Bewegung in einer planparallelen Ebene zum Halteboden sicher und zielgerichtet erreichbar. Dabei ist der Halteboden vorzugsweise zumindest auf einer Längsseite offen ausgebildet, beispielsweise indem die Aufnahmen von Randausnehmungen im Halteboden gebildet sind, also von Ausnehmungen, die sich bis zu dem freien Längsrand des Haltebodens erstrecken. Beispielsweise kann der Halteboden aus Blech oder Kunststoff gefertigt sein, bei dem die Aufnahmen durch Ausstanzen hergestellt sind. Die Zugänglichkeit zu den Aufnahmen wird auf diese Weise entscheidend verbessert, mit dem Vorteil, dass ein leichtes und effizientes Bestücken der Aufnahmen mit Pflanzen bzw. Entnehmen von Pflanzen aus den Aufnahmen von der offenen Seite her möglich ist.

Gemäß einer vorteilhaften Weiterbildung der Erfindung weist die Kulturrinne im lichten Abstand unterhalb des Haltebodens einen Bewässerungsboden auf. Der Abstand zwischen Aufnahmen und Bewässerungsboden ist derart, dass die Pflanzen mit ihren Wurzeln bis zum Bewässerungsboden reichen. Über einen Zulauf wird Wasser auf den Bewässerungsboden gegeben, das von den Wurzeln der Pflanzen in der notwendigen Menge aufgenommen wird. Beispielsweise kann zu diesem Zweck der Bewässerungsboden als Wanne oder Gerinne ausgebildet und Teil einer Bewässerungseinrichtung sein.

Der Bewässerungsboden kann dabei gleichzeitig zur Entwässerung dienen, indem er einen Ablauf aufweist, beispielsweise an der dem Zulauf gegenüberliegenden Seite des Bewässerungsbodens, über den überschüssiges Wasser abgeleitet wird. Vorzugsweise weist ein solcher Be- und Entwässerungsboden ein Gefälle in Längsrichtung und/oder Querrichtung auf.

Gemäß einer weiteren Ausführungsform der Erfindung verläuft unterhalb der Aufnahmen und gegebenenfalls auch unterhalb des Bewässerungsbodens ein Auffangboden, der zum Auffangen von Wasser und Erde geeignet ist und auf diese Weise unterhalb angeordnete Pflanzen oder Anlagenteile vor Verschmutzung schützt. Insbesondere nimmt der Auffangboden Tropfwasser, Erdpartikel und Pflanzenteile auf, die beim Herausnehmen einer Pflanze aus einer Aufnahme nach unten fallen. Zu diesem Zweck ist der Auffangboden vorteilhafterweise breiter ausgestaltet als der Halteboden. Beispielsweise entspricht die Breite des Auffangbodens mindestens der doppelten Breite des Haltebodens, insbesondere mindestens der dreifachen Breite oder vierfachen Breite und steht an der offenen Längsseite der Kulturrinne über den freien Längsrand des Haltebodens über.

Besonders bevorzugt ist es, wenn ein solcher Auffangboden wannenförmig ausgebildet ist oder aufgrund eines Quergefälles zusammen mit einem aufrechten Steg entlang eines oder beider Längsränder ein Gerinne in Längsrichtung bildet. Vorteilhafterweise weist der Auffangboden zusätzlich ein Längsgefälle auf, um das aufgefangene Wasser einem Entwässerungssystem oder Kreislaufsystem zuzuführen.

Eine besondere Ausführungsform der Erfindung sieht vor, dass Bewässerungsboden und Auffangboden von ein und demselben Bauteil gebildet sind, das somit eine Doppelfunktion innehat. Das ermöglicht eine kompakte Bauweise und Materialeinsparungen. Bei dieser Ausführungsform sind Bewässerungsboden und Auffangboden vorzugsweise Teil desselben Entwässerungs- oder Kreislaufsystems. Daneben ist es ebenso möglich, dass Bewässerungsboden und Auffangboden separate Bauteile sind, die unterhalb des Haltebodens in paralleler Richtung verlaufen. Vorzugsweise steht in diesem Fall der freie Längsrand des Auffangbodens über den freien Längsrand des schmäleren Bewässerungsbodens über. In diesem Fall besteht die Möglichkeit, dass Bewässerungsboden und Auffangboden unterschiedlichen Entwässerungs- oder Kreislaufsystemen zugeordnet sind.

Gemäß einer weiteren vorteilhaften Ausführungsform der Erfindung sind Halteboden und/oder Bewässerungsboden und/oder Auffangboden miteinander verbunden, beispielsweise über einen Steg entlang eines ihrer Längsränder, was durch zweimaliges Abkanten, durch Schweißen oder Verschrauben erfolgen kann. Auf diese Weise entsteht ein integrales Bauteil, das die erfindungsgemäße Kulturrinne bildet, und das mit der Montage in der Aufnahmeeinrichtung mehrere Funktionen wie zum Beispiel Haltefunktion sowie Be- und Entwässerungsfunktion in einem übernimmt. Die erfindungsgemäße Kulturrinne zeichnet sich durch eine Längsseite aus, die entlang der dem Steg gegenüberliegenden freien Längsränder von Halteboden und Bewässerungsboden derart offen ist, dass zwischen Halteboden und Bewässerungsboden bzw. Auffangboden eine einfache und schnelle Zugänglichkeit zu den Aufnahmen gewährleistet ist, um Pflanzen über diese offene Seite in die Aufnahmen zu setzen bzw. aus den Aufnahmen zu entnehmen. Die sich daraus ergebenden Vorteile entsprechend den vorbeschriebenen.

Gegenstand der Erfindung ist ferner ein Automat, in dem Pflanzen in erfindungsgemäßen Kulturrinnen zum Verkauf angeboten werden. Die Verwendung erfindungsgemäßer Kulturrinnen ermöglicht in diesem Zusammenhang einen hohen Automatisierungsgrad, was Voraussetzung für die Realisation eines Automaten ist. Gleichzeitig werden die Pflanzen wie zum Beispiel Salate, Gemüse, Blumen und dergleichen in den erfindungsgemäßen Kulturrinnen bis zu deren Kauf frisch gehalten, so dass keine Qualitätseinbußen durch dem Verkauf über einen erfindungsgemäßen Automaten verbunden sind.

Für den Käufer ist es ferner von Vorteil, dass ihm in einem erfindungsgemäßen Automaten eine Vielzahl Pflanzen präsentiert werden, unter denen er die freie Auswahl hat. Der Käufer kann sich gezielt für eine von ihm bevorzugte Pflanze entscheiden, die dann von der Positioniereinrichtung in die Ausgabeeinrichtung gelegt wird.

Zu den genannten Zwecken kann ein erfindungsgemäßer Automat mit einer Aufnahmeeinrichtung ausgestattet sein, in die eine erfindungsgemäße Kulturrinne integriert ist. Durch die seitlich offene Bauart der Kulturrinne ist eine Entnahme der Pflanzen über die offene, frei zugängliche Seite möglich. Ein geeigneter Greifer kann bei einer solchen Ausgestaltung der Kulturrinne eine Pflanze mit nur einer Linearbewegung aus der Aufnahme holen.

Die Erfindung wird nachstehend anhand eines in der Zeichnung dargestellten Ausführungsbeispiels näher erläutert, wobei weitere Merkmale und Vorteile der Erfindung offenbar werden. Das Ausführungsbeispiel stellt lediglich einen Weg der Realisierung der Erfindung dar, ohne sich jedoch darauf zu beschränken. Ebenso liegen Abwandlungen im Rahmen der Erfindung, die sich dem Fachmann aus vorliegenden Angaben ohne Weiteres ergeben.

Es zeigt
- Fig. 1: eine isometrische Ansicht auf die Vorderseite eines erfindungsgemäßen Automaten,
- Fig. 2: eine Ansicht auf die Rückseite des in Fig. 1 dargestellten Automaten,
- Fig. 3: eine Seitenansicht auf den in den Fig. 1 und 2 dargestellten Automaten in x-Richtung,
- Fig. 4: einen Schnitt durch den in Fig. 2 dargestellten Automaten entlang der dortigen Linie IV - IV,
- Fig. 5: eine Draufsicht auf den in den Fig. 1 bis 4 dargestellten Automaten,
- Fig. 6: eine Detailansicht auf den in Fig. 5 mit VI gekennzeichneten Bereich,
- Fig. 7: eine Detailansicht entgegen der x-Richtung des in Fig. 6 dargestellten Bereichs,
- Fig. 8: eine Detailansicht entgegen der y-Richtung des in Fig. 6 dargestellten Bereichs,
- Fig. 9: eine isometrische Ansicht auf eine erfindungsgemäße Kulturrinne,
- Fig. 10: einen Querschnitt durch die in Fig. 9 dargestellte Kulturrinne entlang der in Fig. 11 dargestellten Linie X-X,
- Fig. 11 a - f: jeweils eine Draufsicht auf eine Ausführungsform einer Aufnahme für eine Pflanze,
- Fig. 12: eine Schrägansicht auf die Vorderseite der Ausgabeeinrichtung,
- Fig. 13: eine Schrägansicht auf die Rückseite der Ausgabeeinrichtung,
- Fig. 14: eine Detailansicht auf den Betätigungsmechanismus der Ausgabeeinrichtung, und
- Fig. 15: eine Detailansicht auf den in Fig. 6 mit XV gekennzeichneten Bereich

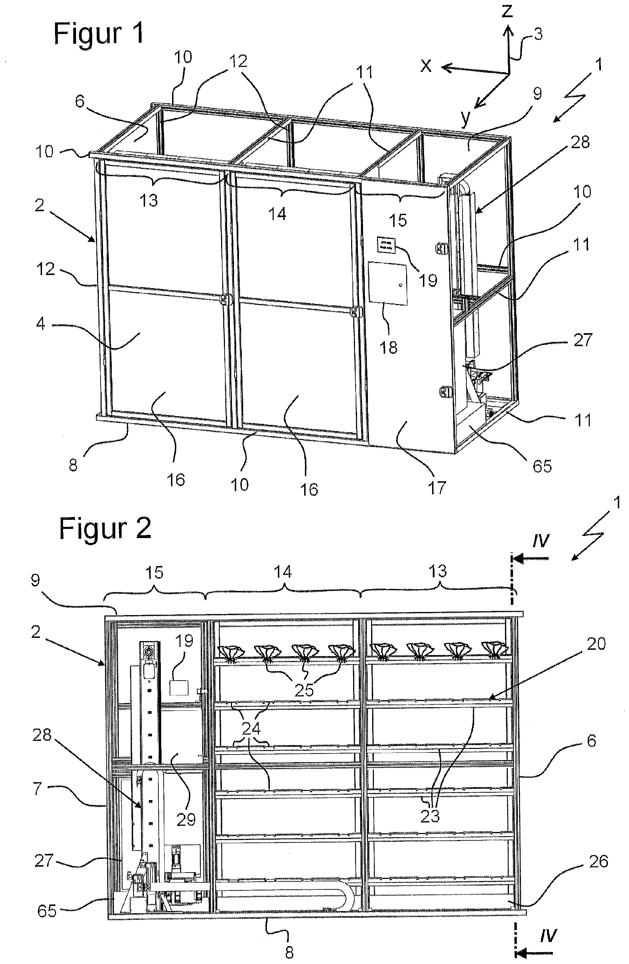

Die Fig. 1 bis 5 zeigen einen erfindungsgemäßen Automaten 1 in unterschiedlichen Ansichten und Schnitten. Der Automat 1 besitzt ein etwa schrankförmiges Gehäuse 2, dessen Breite, Tiefe und Höhe den Achsen x, y und z eines kartesischen Koordinatensystems 3 entsprechen. Das Gehäuse 2 besitzt eine Vorderwand 4, eine Rückwand 5, zwei Seitenwänden 6, 7, einen Gehäuseboden 8 und einen Gehäusedeckel 9, die im Wesentlichen von Tragprofilen 10, 11, 12 in x-Richtung, y-Richtung und z-Richtung gebildet und zum Beispiel mit Blechen oder Verkleidungen aus Kunststoff ausgefacht sind. Zur verbesserten Wärmedämmung können die Gehäusewände 4, 5, 6, 7 sowie der Gehäuseboden 8 und der Gehäusedeckel 9 aus wärmedämmendem Material bestehen oder eine solche Schicht aufweisen. Um das Gehäuseinnere besser erkennen zu können, sind in der Zeichnung die Ausfachungen der Seitenwänden 6, 7, der Rückwand 5 und des Gehäusebodens 8 sowie Gehäusedeckels 8 nicht dargestellt.

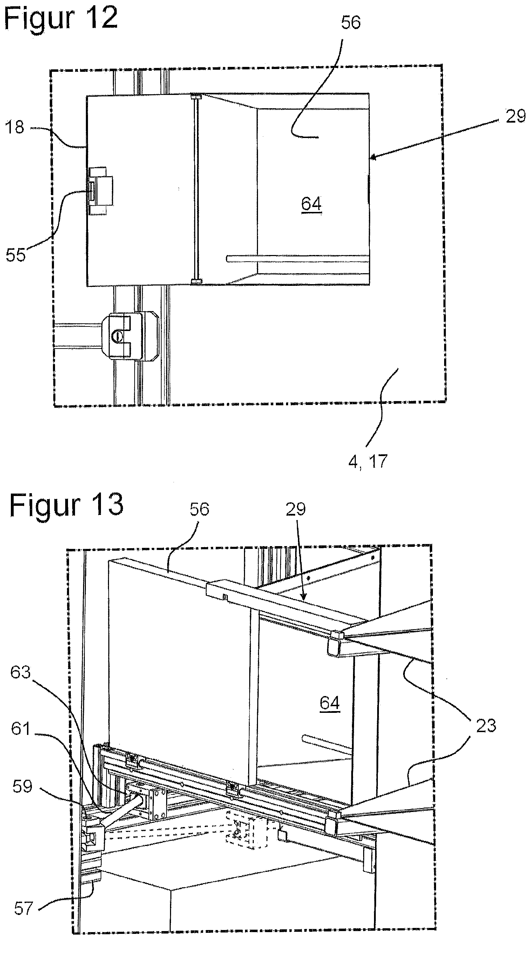

Das Gehäuse 2 ist in x-Richtung unterteilt in einen in Fig. 1 links dargestellten ersten Gehäuseabschnitt 13, einen mittleren zweiten Gehäuseabschnitt 14 und einen rechts dargestellten dritten Gehäuseabschnitt 15. Im Bereich des ersten Gehäuseabschnitts 13 und zweiten Gehäuseabschnitts 14 besitzt das Gehäuse 2 jeweils eine aufschwenkbare Tür 16, deren Türblatt transparent ausgebildet ist, um den Blick ins Gehäuseinnere zu ermöglichen. Im dritten Gehäuseabschnitt 15 ist die Vorderwand 4 von einer ebenfalls aufschwenkbaren Tür 17 aus Blech gebildet mit einer mittels einer Klappe 18 verschließbaren Öffnung (Fig. 12) und mit einer Bedieneinrichtung 19 zur Dateneingabe im Zuge des Auswahl- und Bezahlvorgangs. Die Bedieneinrichtung 19 weist zu diesem Zweck ein Display, ein Tastaturfeld und gegebenenfalls ein Kartenlesegerät oder andere Bezahleinrichtung auf.

Die Gehäuseabschnitte 13, 14, 15 bilden jeweils ein Gehäusemodul, so dass durch Aneinanderreihung ein beliebiger Anzahl Gehäusemodule, beispielsweise mehrere Gehäuseabschnitte 13 bzw. 14, die Länge des Automaten 1 und damit seine Aufnahme- und Leistungskapazität an den Bedarf angepasst werden können.

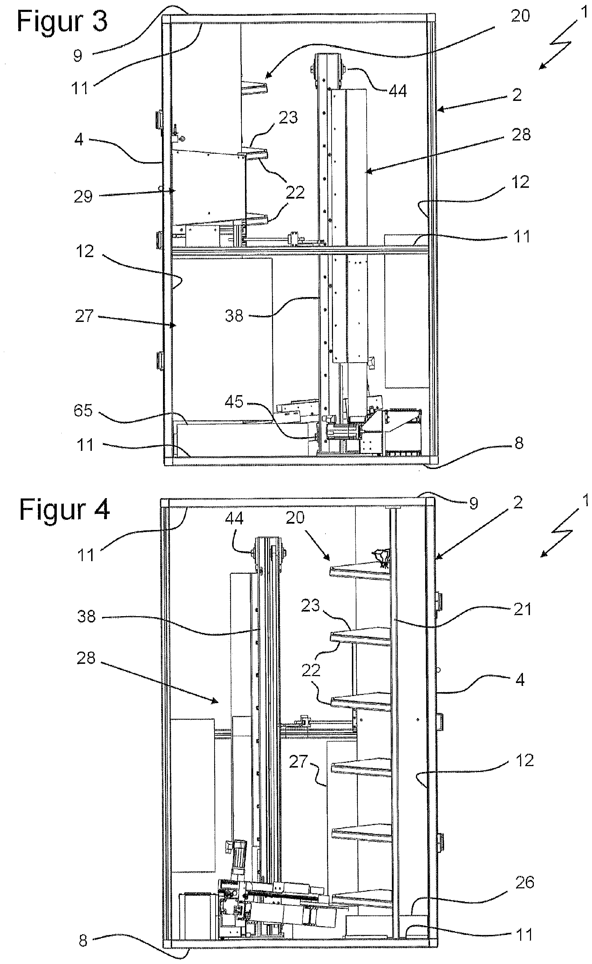

Wie vor allem aus den Fig. 2 bis 5 hervorgeht erstreckt sich im Inneren des Gehäuses 2 über den ersten und zweiten Gehäuseabschnitt 13, 14 entlang der Vorderwand 4 eine regalartige Aufnahmeeinrichtung 20. Zur Aufnahmeeinrichtung 20 gehören Regalpfosten 21, die sich in einheitlichem lichten Abstand zur Vorderwand 4 vom Gehäuseboden 8 bis zum Gehäusedeckel 9 erstrecken, an denen sie befestigt sind. Die Regalpfosten 21 weisen an ihrer der Rückwand 5 zugewandten Seite Konsolträger 22 auf, die mit einem Gefälle zum jeweiligen Regalpfosten 21 montiert sind. Dabei fluchten die Konsolträger 22 aller Regalpfosten 21 etagenartig auf den einzelnen Höhenlagen (Fig. 4).

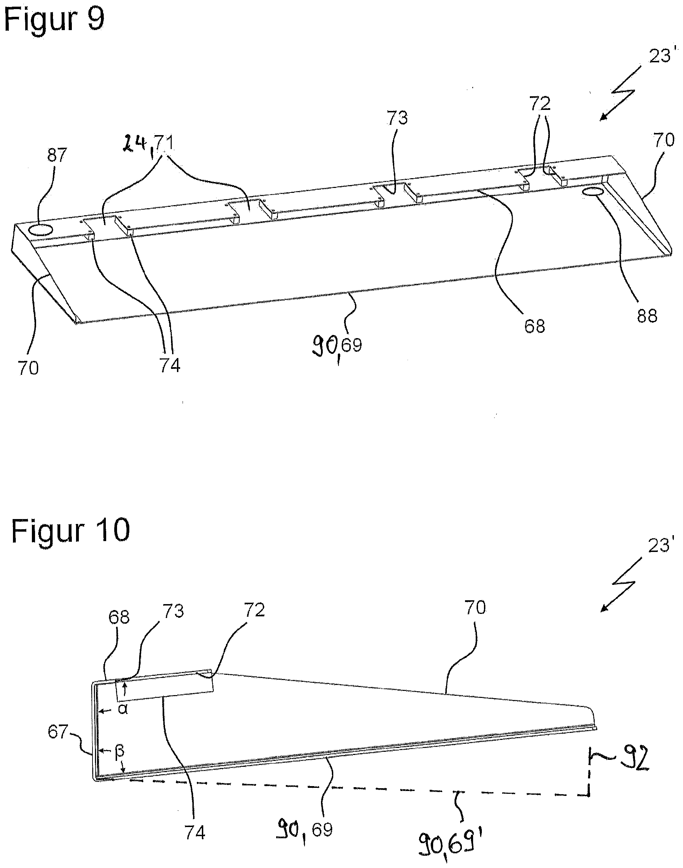

Die Konsolträger 22 einer gleichen Höhenlage tragen jeweils eine Kulturrinne 23, von denen jede eine Anzahl von Aufnahmen 24 besitzt, in denen jeweils eine Pflanze 25 wie zum Beispiel ein Salatkopf gehalten ist (Fig. 2). Der Aufbau und die Funktion der Kulturrinnen 23 sind im Einzelnen unter den Fig. 9 bis 11 beschrieben. Unterhalb der Aufnahmeeinrichtung 20 ist eine erste Auffangwanne 26 zum Sammeln des von den Pflanzen 25 abtropfenden Wassers angeordnet.

Der dritte Gehäuseabschnitt 15 nimmt in dem hinter der Tür 17 liegenden unteren Bereich eine Einrichtung 27 zur Be- und Entwässerung sowie zur Wasseraufbereitung auf. Im Wesentlichen umfasst die Einrichtung 27 einen Vorratsbehälter, aus dem Wasser mittel einer Pumpe und einem Leitungssystem zu den einzelnen Kulturrinnen 23 gepumpt wird.

Der Rücklauf von den Kulturrinnen 23 erfolgt wiederum über ein Leitungssystem, wobei das Wasser vor Einleitung in den Vorratbehälter einer Aufbereitungsstation zugeführt wird, der beispielsweise einen Filter und/oder eine UV-Beleuchtung umfasst. In diesem Bereich ist optional auch ein Klimagerät untergebracht, das die Temperatur und/oder Feuchtigkeit im Gehäuseinneren regelt. Unterhalb der Einrichtung 27 ist wiederum eine zweite Auffangwanne 65 vorgesehen.

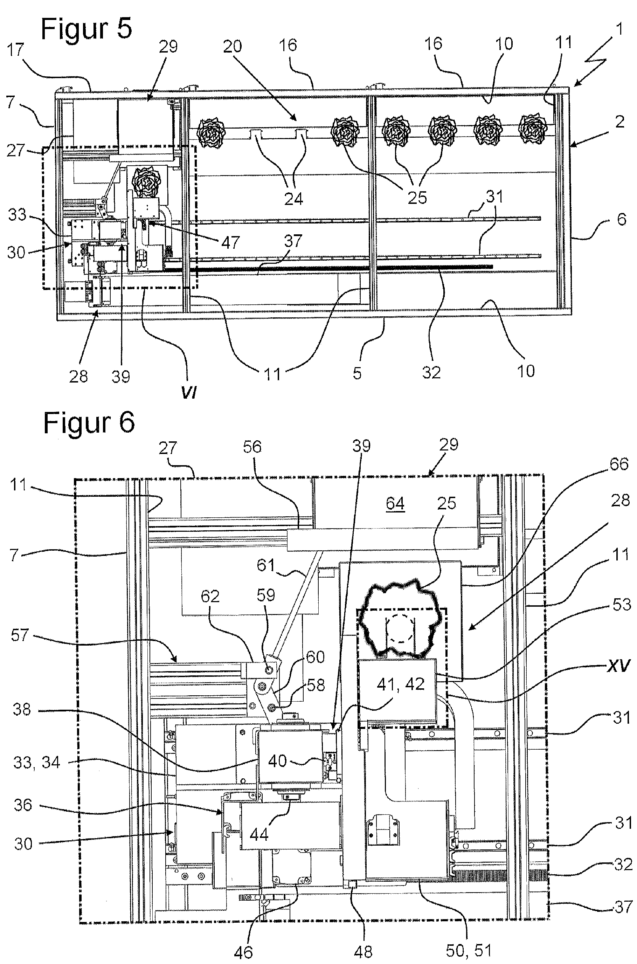

Die Positioniereinrichtung 28 für das Handling der Pflanzen 25 innerhalb des Automaten 1 ist in den Fig. 2 bis 5 im Überblick und in den Fig. 6 bis 8 im Detail dargestellt. Sie erstreckt sich im rückwärtigen, an die Rückwand 5 anschließenden Gehäusebereich über alle Gehäuseabschnitte 13, 14, 15 und ist damit in der Lage, sowohl den Bereich der Aufnahmeeinrichtung 20 als auch den der Ausgabeeinrichtung 29 zu erreichen. Aufgabe der Positioniereinrichtung 28 ist es, eine ausgewählte Pflanze 25 aus der entsprechenden Aufnahme 24 zu holen und in der Ausgabeeinrichtung 29 zur Entnahme durch den Käufer bereitzulegen.

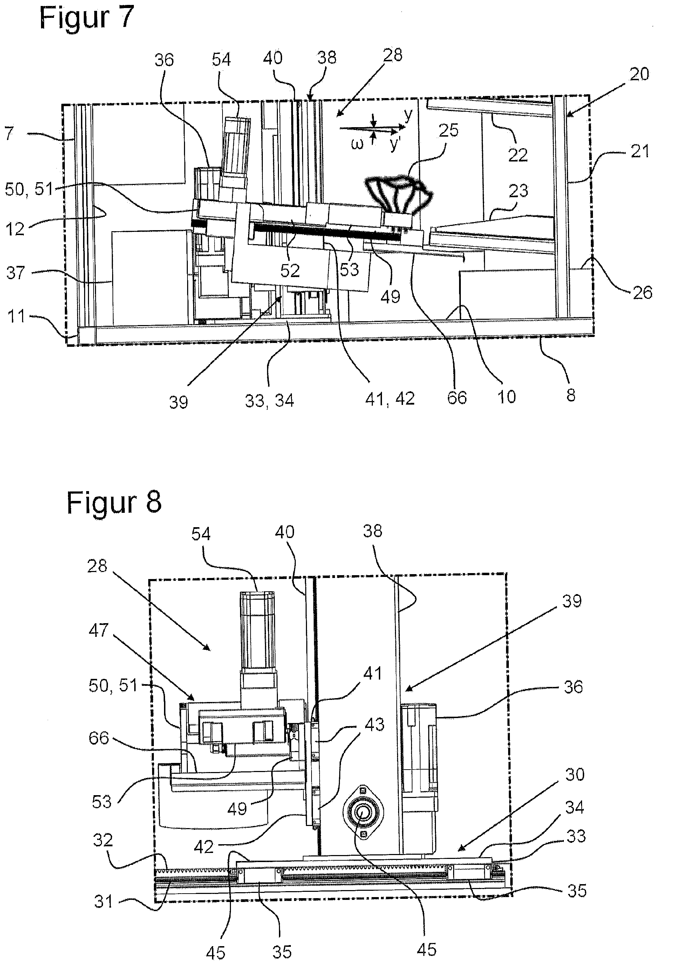

Dazu besitzt die Positioniereinrichtung 28 einen in x-Richtung wirkenden, ersten Linearantrieb 30 mit zwei parallel zueinander, in x-Richtung verlaufenden Führungsschienen 31 und einer parallel dazu verlaufender Zahnstange 32, die alle starr an den Tragprofilen 11 des Gehäusebodens 8 befestigt sind (Fig. 5). Die Führungsschienen 31 bilden eine Bahn für einen Schlitten 33, der im Wesentlichen aus einer Montageplatte 34 und an deren Unterseite angeordneten ersten Laufwagen 35 besteht, die die Führungsschienen 31 formschlüssig und dabei längsverschieblich umgreifen. Der Antrieb für den Schlitten 33 besorgt ein auf dem Schlitten 33 mitfahrender Elektromotor 36, der über ein Getriebe und Zahnrad in Wirkeingriff mit der Zahnstange 32 steht und über eine Energieführungskette 37 mit Energie versorgt wird (Fig. 5 und 8).

Der Schlitten 33 trägt eine Säule 38, die als Teil eines in z-Richtung wirkenden, zweiten Linearantriebs 39 biegsteif auf der Oberseite der Montageplatte 34 befestigt ist und sich in z-Richtung über die gesamte Höhe der Aufnahmeeinrichtung 20 erstreckt. Entlang der in x-Richtung weisenden Außenseite der Säule 38 ist ein Führungsprofil 40 befestigt, auf dem ein zweiter Schlitten 41 mit einer zweiten Montageplatte 42 und zweiten Laufwagen 43 längsverschieblich gelagert ist (Fig. 8).

Im Inneren der Säule 38 ist ein umlaufender Zahnriemen oder eine Kette über ein oberes Zahnrad um eine obere Achse 44 und über ein unteres Zahnrad um eine untere Achse 45 geführt. Das untere Zahnrad ist über einen auf dem ersten Schlitten 33 montierten Elektromotor 46 angetrieben. Für den Antrieb des zweiten Schlittens 41 ist der Zahnriemen bzw. die Kette kraftschlüssig mit dem zweiten Schlitten 41 verbunden.

Darüber hinaus besitzt die Positioniereinrichtung 28 noch einen quer zur x- und z-Richtung wirkenden, auf dem zweiten Schlitten 41 mitfahrenden dritten Linearantrieb 47. Der dritte Linearantrieb 47 umfasst ein an der zweiten Montageplatte 42 befestigtes Führungsprofil 48 und eine parallel unterhalb dazu befestigte Zahnstange 49. Führungsprofil 48 und Zahnstange 49 sind in der y-z-Ebene um einen Winkel ω um die x-Achse nach unten verschwenkt, wodurch der dritte Linearantrieb 47 in einer zu den Konsolträgern 22 parallelen Richtung wirkt. Diese Richtung wird im Weiteren als y'-Richtung bezeichnet (Fig. 7 und 8). Der Winkel ω kann beispielsweise in einem Bereich zwischen 3° und 7° liegen, vorzugsweise zwischen 4° und 6°. Im vorliegenden Ausführungsbeispiel beträgt der Winkel ω 5°.

Ferner umfasst der dritte Linearantrieb 47 einen dritten Schlitten 50 mit einer Winkelschiene 51, die wiederum über daran befestigte Laufwagen entlang des Führungsprofils 48 verschieblich am zweiten Schlitten 41 gelagert ist. Die Winkelschiene 51 geht in einen in Richtung der Aufnahmerichtung 20 weisenden auskragenden Haltearm 52 über, an dessen freiem Ende ein Greifer 53 befestigt ist. Für den Antrieb des dritten Schlittens 50 und damit des Greifers 53 in y'-Richtung ist auf der Winkelschiene 51 ein Elektromotor 54 angeordnet, auf dessen Welle ein mit der Zahnstange 49 kämmendes Zahnrad sitzt.

Die nicht dargestellte Datenverarbeitungs- und Steuerungseinrichtung, die zum einen die beim Auswählen und Bezahlen am Bedienterminal 19 anfallenden Informationen erfasst und verarbeitet und die zum anderen die zur Ausgabe der Pflanze 25 notwendigen Datensätze zur Steuerung der Positioniereinrichtung 28 einschließlich Greifer 53 und der Ausgabeeinrichtung 29 erstellt und übermittelt, kann sich an einem freien Platz im Gehäuse 2 befinden oder als eigenständiges Modul in einem Schaltschrank an der Außenseite des Gehäuses 2 angeordnet sein.

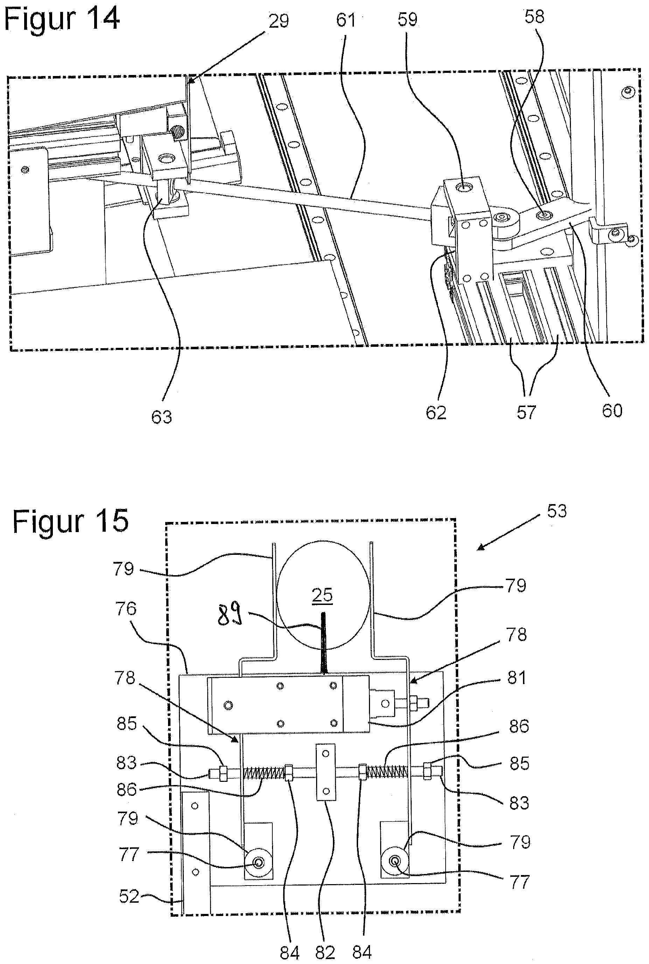

Der konstruktive Aufbau des Greifers 53 geht vor allem aus Fig. 15 hervor, die den in Fig. 6 mit XV gekennzeichneten Bereich in größerem Maßstab und ohne Greiferabdeckung zeigt. Man sieht eine Basisplatte 76 die starr am Ende des Haltearms 52 der Positioniereinrichtung 28 befestigt ist (Fig. 6). An ihrem der Rückwand 5 zugewandten Randbereich ragen senkrecht aus der Oberfläche der Basisplatte 76 zwei in x-Richtung beabstandete Lagerachsen 77, an denen jeweils das rückwärtige Ende eines bandförmigen Greifbackens 78 mittels eine Gleitbuchse 79 angelenkt ist. Die Greifbacken 78 bestehen beispielsweise aus einem Stahl- oder Kunststoffband, vorzugsweise mit elastischen Eigenschaften, und sind in y'-Richtung zum gegenüberliegenden frei auskragenden Ende hin zweimal gekröpft, wodurch jeweils zwei sich ungefähr parallel gegenüberliegende Halteabschnitte 79 entstehen, zwischen denen eine Pflanze 25 bei deren Ergreifen zu liegen kommt.

Im Bereich des Greifers 53 können zudem Mittel zur Lagesicherung der Pflanze 25 während des Handlings vorgesehen sein. So können die Greifbacken 78 im Kontaktbereich mit der Pflanze 25 eine nicht dargestellte Profilierung aufweisen, beispielsweise in Form von Noppen, Riffelleisten, einer Wellenstruktur und dergleichen, um den aufrechten Halt der Pflanze 25 zu verbessern. Alternativ oder kumulativ ist es möglich, am Greifer 53 mindestens einen Dorn 89 vorzusehen, der sich mittig zwischen und parallel zu den Greifbacken 78 erstreckt und bei Annäherung des Greifers 53 an die Pflanze 25 in diese eindringt.

Etwa mittig zwischen dem angelenkten Ende eines Greifbackens 78 und dem frei auskragenden Ende sind die beiden Greifbacken 78 über einen in x-Richtung wirkenden Linearaktor 81 verbunden. Der Linearaktor 81 ist lediglich an den Greifbacken 78 aufgehängt und schwebt ansonsten frei über der Basisplatte 76. Bei Aktivierung des Linearaktors 81 werden die beiden Greifbacken 78 mit entgegengesetztem Drehsinn um die Lagerachsen 77 geschwenkt, was ein Öffnen bzw. Schließen der Halteabschnitte 80 bewirkt.

Ferner ist mittig zwischen den beiden Greifbacken 78 in dem Bereich zwischen den angelenkten Enden und dem Linearaktor 81 ein Lagerklotz 82 fest mit der Basisplatte 76 verbunden, der von einem in x-Richtung verlaufenden Gewindebolzen 83 durchsetzt ist. Die freien Enden des Gewindebolzens 83 erstrecken sich jeweils lose durch die Greifbacken 78. Auf den zwischen Lagerklotz 82 und Greifbacken 78 liegenden Abschnitten des Gewindebolzens 83 sitzt jeweils eine ein- und feststellbare innere Schraubenmuttern 84, auf den außerhalb der Greifbacken 78 liegenden Endabschnitten jeweils eine ein- und feststellbare äußere Schraubenmutter 85. Auf den beiden Abschnitten zwischen innerer Schraubenmutter 84 und Greifbacken 78 ist jeweils eine vorgespannte Druckfeder 86 auf den Gewindebolzen 83 aufgeschoben, die in Ruhestellung des Greifers 53 die Greifbacken 78 jeweils gegen die äußere Schraubemutter 85 spannt.

Zum Ergreifen einer Pflanze 25 wird der Linearaktor 81 aktiviert. Beispielsweise kann es sich bei dem Linearaktor 81 um einen elektromagnetischen Aktor handeln, der bei seiner Betätigung die beiden Greifarme 78 entgegen der Kraft der Druckfedern 86 aufeinander zuschwenkt, wodurch sich der Abstand zwischen den Halteabschnitten 80 verkleinert. Nach Deaktivierung des Linearaktors 81 drücken die beiden Druckfedern 86 die Greifbacken 78 in ihre Ruhestellung zurück, wodurch sich die Haltabschnitte 80 öffnen und die Pflanze 25 freigeben.

Der Greifer 53 der Positioniereinrichtung 28 ist mittels des ersten Linearantriebs 30 in x-Richtung bewegbar, mittels des zweiten Linearantriebs 39 in z-Richtung und mittels des dritten Linearantriebs 47 in y'-Richtung. Durch eine kombinierte Steuerung der drei Linearantriebe 30, 39, 47 lässt sich der Greifer 53 zu jeder Aufnahme 24 der Aufnahmeeinrichtung 20 bewegen, um eine dort vorhandene Pflanze 25 zu ergreifen und zur Ausgabeeinrichtung 29 zu befördern. Damit beim Transport der Pflanze 25 von einer Aufnahme 24 zum Ausgabefach 64 weder Wasser noch Erde nach unten fallen, ist an der Unterseite des Greifers 53 unterhalb der Greifbacken 78 ein Tropfblech 66 fest montiert.

Die Ausgabeeinrichtung 29, deren Aufbau und Funktionsweise sich vor allem aus den Fig. 12 bis 14 ergibt, besteht im Wesentlichen aus einem allseits geschlossenen Ausgabefach 64, das für den Käufer der Pflanze 25 über die bereits erwähnte Klappe 18 in der Vorderwand 4 zugänglich ist. Die Klappe 18 ist zum Öffnen des Ausgabefachs 64 zur Seite aufschwenkbar, nachdem der Schließmechanismus 55 von der Steuerungseinrichtung 27 freigegeben worden ist. Im Inneren des Ausgabefachs 64 sieht man ein stabförmiges Rückhalteelement 56, das ein ungewolltes Herausfallen der Pflanze 25 während des Öffnens der Klappe 18 verhindert.

Die der Klappe 18 gegenüberliegende hintere Wand 56 des Ausgabefachs 54 ist zum Bestücken des Ausgabefachs 54 mit einer Pflanze 25 entlang der Achsen 56 in x-Richtung seitlich verschiebbar. Der Mechanismus zum Öffnen der hinteren Wand 56 ist an die Bewegung des ersten Linearantriebs 30 gekoppelt. Wie vor allem aus den Fig. 12 bis 14 hervorgeht umfasst der Mechanismus eine starr an den Tragprofilen 11, 12 der Seitenwand 7 angeordnete Konsole 57 mit einer ersten Lagerachse 58 und einer zweiten Lagerachse 59, die beide in z-Richtung weisen. Auf der ersten Lagerachse 58 sitzt ein zweiarmiger Hebel 60, dessen einer Arm von der Säule 38 beim Bewegen des ersten Linearantriebs 30 in Endstellung betätigt wird und dessen anderer Arm gelenkig mit dem Ende eines Schwenkstabs 61 verbunden ist. Der Schwenkstab 61 ist wiederum längsverschieblich in einem Haltebügel 62 gelagert, der drehbar auf der zweiten Lagerachse 59 sitzt. Das freie Ende des Schwenkstabs 61 ist längsverschieblich in einer um die z-Richtung verdrehbaren Lagerhülse 63 an der hinteren Wand 56 gehalten.

Eine erfindungsgemäße Kulturrinne 23 ist Gegenstand der Fig. 9 und 10, die lediglich ein Rinnenelement 23' zeigen. Mehrere Elemente 23' können axial aneinandergefügt und in Etagen übereinander angeordnet werden, woraus sich eine regalartige Anordnung einer Anzahl Kulturrinnen 23 ergibt. Dabei ist es möglich, dass sich ein Element 23' über nur einen Längsabschnitt einer Kulturrinne 23 erstreckt oder über deren gesamte Länge.

Wie vor allem aus Fig. 10 ersichtlich besitzt eine erfindungsgemäße Kulturrinne 23 einen etwa U-förmigen, im Gebrauchszustand liegend angeordneten Querschnitt mit einem nach der Montage in einer Aufnahmeeinrichtung in Schwerkraftrichtung weisenden aufrechten Steg 67, von dessen oberem Längsrand sich als oberer Schenkel ein Halteboden 68 quer zum Steg 67 erstreckt und von dessen unterem Längsrand als unterer Schenkel ein Bewässerungsboden 90, der zugleich einen Auffangboden 69 bildet. Halteboden 68 und Bewässerungsboden 90 bzw. Auffangboden 69 verlaufen also parallel zueinander, vorzugsweise planparallel. Die stirnseitigen Enden der Kulturrinne 23 sind jeweils von einer Stirnwand 70 verschlossen.

Der Halteboden 68 schließt mit dem Steg 67 einen Winkel α von mindestens 90° ein, der Bewässerungsboden 90 bzw. Auffangboden 69 einen Winkel β von maximal 90°. Vorzugsweise ist der Winkel α so gewählt, dass beispielsweise die Vorschubbewegung eines automatischen Greifers 53 in y'-Richtung parallel zur Ebene des Haltebodens 68 ausgeführt werden kann, und der Winkel β so, dass der Bewässerungsboden 90 und Auffangboden 69 planparallel zum Halteboden 67 liegen.

Die auf die y'-Richtung bezogene Breite des Auffangbodens 69 ist größer als die entsprechende Breite des Haltebodens 68 und beträgt zum Beispiel mindestens dem Zweifachen oder mindestens Dreifachen der Breite des Haltebodens 68, so dass der Auffangboden 69 in der Lage ist, beim Herausnehmen einer Pflanze 25 mit seinem über den Halteboden 68 überstehenden Bereich abtropfendes Wasser, Erde oder Pflanzenteile aufzufangen und darunter angeordnete Pflanzen zu schützen. Im vorliegenden Ausführungsbeispiel ist der Auffangboden 69 mindestens viermal so breit wie der Halteboden 68. Zusammen mit dem sich bei einem Winkel β von weniger als 90° ergebenden Quergefälle hin zum Steg 67 entsteht vor allem im Bereich unterhalb des Haltebodens 68 ein Gerinne in Längsrichtung der Kulturrinne 23, in dem sich Wasser sammelt und über das die Kulturrinne 23 be- und entwässerbar ist. Die Kulturrinne 23 kann zur besseren Be- und Entwässerung zusätzlich mit Längsgefälle in der Aufnahmeeinrichtung 20 angeordnet sein.

Möglich ist auch eine Variante, bei der der Winkel β 90° oder mehr beträgt. Um auch in diesem Fall ein Gerinne ausbilden zu können, ist entlang des freien Längsrandes des Auffangbodens 69' ein nach oben weisender Steg 92 vorgesehen (Fig. 10, gestrichelte Darstellung).

Zur Bewässerung der Pflanzen 25 besitzt eine erfindungsgemäße Kulturrinne 23 an ihrem einen stirnseitigen Ende einen Zulauf 87 und zur Entwässerung am gegenüberliegenden Ende einen Ablauf 88. Zulauf 87 und/oder Ablauf 88 können beispielsweise von einer Öffnung oder einem Stutzen im Halteboden 68, Bewässerungsboden 90 bzw. Auffangboden 69, Steg 67 oder in der Stirnwand 70 gebildet sein, die an eine Be- bzw. Entwässerungsleitung angeschlossen sind. Der Bewässerungsboden 90 bzw. Auffangboden 69 hat in diesem Fall gleichzeitig die Funktion eines Entwässerungsbodens.

Der Halteboden 68 gemäß Fig. 9 weist über seine Länge eine Anzahl Aufnahmen 24 auf, die in der Draufsicht jeweils einen recheckförmigen Umriss besitzen mit zwei sich gegenüberliegenden Seiten 72 und einem die Seiten 72 verbindenden Grund 73. An der dem Auffangboden 69 zugewandten Unterseite weist der Halteboden 68 entlang der Seiten 72 jeweils einen Anlagesteg 74 auf, der aber auch auf der Oberseite oder auf Ober- und Unterseite und/oder entlang des Grunds 73 verlaufen kann. Der Anlagesteg 74 dient mit seinen Anlageflächen unter anderem der besseren Positionierung der Pflanze 25 in der Aufnahme 24.

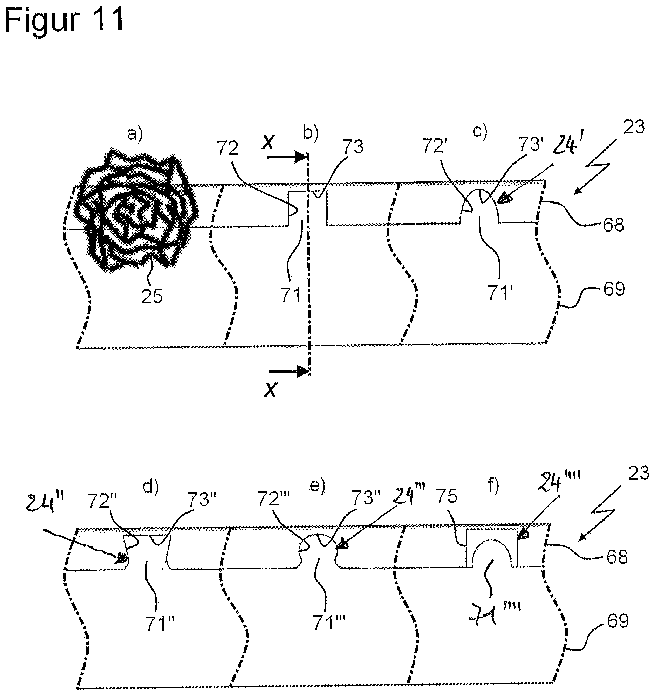

Wie beispielsweise Fig. 11a) entnommen werden kann dienen die Aufnahmen 24 zur Aufnahme einer Pflanze 25, im vorliegenden Ausführungsbeispiel eines Salats, der mit seinem Wurzelballen durch die rechteckförmigen Randausnehmungen 71 reicht und dabei an den Seiten 72 und dem Grund 73 der Aufnahme 24 anliegt. Der Wurzelballen erstreckt sich mit seinem größten Teil unterhalb des Haltebodens 68 bis hin zum Bewässerungsboden 90 bzw. Auffangboden 69, während die Salatblätter oberhalb des Haltebodens 68 liegen.

Bevorzugte Varianten der Randausnehmungen 71 sind Gegenstand der Fig. 11 b) bis f), wobei Fig. 11b) eine rechteckförmige, insbesondere quadratische Aufnahme 24 betrifft.

Davon unterscheidet sich die Ausnehmung 24' gemäß Fig. 11c) durch einen gekrümmten Verlauf der Seiten 72' und des Grunds 73' der Randausnehmung 71'. Vorzugsweise besitzen die Randausnehmungen 71' die Form einer Halbellipse oder eines Halbkreises und folgen auf diese Weise der natürlichen Form einer Pflanze 25, was die Anlagefläche vergrößert und den Halt der Pflanze 25 in der Aufnahme 24 verbessert.

Die Varianten gemäß der Fig. 11d) und e) zeichnen sich dadurch aus, dass die Seiten 72" bzw. 72‴ eine Hinterscheidung an der Randausnehmung 71" bzw. 71‴ bilden, wodurch sich die Randausnehmungen 71" bzw. 71‴ zum Grund 73" bzw. 73‴ hin weiten. Auf diese Weise üben die Seiten 72" bzw. 72‴ eine gewisse Rückhaltekraft gegen ungewolltes Herausfallen einer Pflanze 25 aus einer Aufnahme 24" bzw. 24‴ aus.

Alternativ oder kumulativ können sich die Randausnehmungen 71" bzw. 71‴ im Übergangsbereich zum freien Längsrand des Haltebodens 68" bzw. 68‴ auch weiten, um das Bestücken einer Kulturrinne 23 mit Pflanzen 25 zu erleichtern, indem die Seiten 72" bzw. 72‴ zum freien Längsrand des Haltebodens 68 eine Art Einfädeltrichter bilden.

Fig. 11f) zeigt schließlich eine Variante, bei der die Aufnahme 24"" von einem Einsatzteil 75 gebildet ist, das formschlüssig in die Randausnehmung 71ʺʺ eingesetzt ist. Das Einsatzteil 75 kann beispielsweise ein austauschbares Kunststoffspritzgussteil sein. Damit kann eine Aufnahme 24 einer damit ausgerüstete Kulturrinne 23 ohne großen Aufwand an die jeweilige Art der Pflanze 25 angepasst bzw. umgerüstet werden. Beispielsweise kann das Einsatzteil 75 eine Innenkontur aufweisen wie unter den Fig. 11b bis 11e beschrieben.

## Patentansprüche

1. Kulturrinne zur Aufnahme und Anzucht von Pflanzen (25), insbesondere Nutz- oder Zierpflanzen wie Salate, Gemüse, Blumen und dergleichen, mit einem Halteboden (68), in dem mindestens eine Aufnahme (24) zur Halterung jeweils einer Pflanze (25) angeordnet ist, wobei die Kulturrinne entlang einer Längsseite derart offen ausgebildet ist, dass eine Zugänglichkeit zu den Aufnahmen (24) über die offene Längsseite gegeben ist, wobei unterhalb des Haltebodens (68) ein Bewässerungsboden (90) angeordnet ist, **dadurch gekennzeichnet, dass** sich die offene Längsseite zwischen dem freien Längsrand des Haltebodens (68) und freiem Längsrand des Bewässerungsbodens (90) erstreckt.

2. Kulturrinne nach Anspruch 1, **dadurch gekennzeichnet, dass** unterhalb des Haltebodens (68) ein Auffangboden (69) angeordnet ist.

3. Kulturrinne nach Anspruch 2, **dadurch gekennzeichnet, dass** der Bewässerungsboden (90) gleichzeitig den Auffangboden (69) bildet.

4. Kulturrinne nach einem der Ansprüche 1 bis 3, **dadurch gekennzeichnet, dass** Halteboden (68) und/oder der Bewässerungsboden (90) und/oder der Auffangboden (69) entlang eines ihrer Längsränder über einen Steg (67) miteinander verbunden sind und die gegenüberliegenden Längsränder die offene Längsseite bilden.

5. Kulturrinne nach Anspruch 4, **dadurch gekennzeichnet, dass** der Halteboden (68) und/oder der Bewässerungsboden (90) und/oder der Auffangboden (69) mit dem Steg (67) ein Gerinne bilden.

6. Kulturrinne nach einem der Ansprüche 2 bis 5, **dadurch gekennzeichnet, dass** der Auffangboden (69) breiter ist als der Halteboden (68) und der Auffangboden (69) mit seinem freien Längsrand über den freien Längsrand des Haltebodens (68) übersteht.

7. Kulturrinne nach einem der Ansprüche 2 bis 6, **dadurch gekennzeichnet, dass** der Bewässerungsboden (90) und/oder Auffangboden (69) wannen- oder trogartigartig ausgebildet sind.

8. Kulturrinne nach einem der Ansprüche 1 bis 7, **dadurch gekennzeichnet, dass** die Aufnahmen (24) im Halteboden (68) von Ausnehmungen im Halteboden (68) gebildet sind, vorzugsweise von Randausnehmungen (71), die vom freien Längsrand des Haltebodens (68) ausgehen.

9. Kulturrinne nach Anspruch 8, **dadurch gekennzeichnet, dass** die Ausnehmungen Rechteckform oder Rundform besitzen.

10. Kulturrinne nach Anspruch 8 oder 9, **dadurch gekennzeichnet, dass** die Seiten und/oder der Grund der Randausnehmungen (71) einen Anlagesteg (74) zur Anlage der Pflanze (25) aufweist.

11. Kulturrinne nach einem der Ansprüche 8 bis 10, **dadurch gekennzeichnet, dass** sich die Randausnehmungen (71", 71‴) zum ihrem Grund (73", 73‴) und/oder im Übergang zum freien Längsrand des Haltebodens (68) hin weiten.

12. Kulturrinne nach einem der Ansprüche 8 bis 11, **dadurch gekennzeichnet, dass** die Aufnahmen (24) von Einsatzteilen (75) gebildet sind, die in die Ausnehmungen eingesetzt sind.

13. Automat zum Verkauf von Pflanzen (25), insbesondere Nutz- und Zierpflanzen wie Salate, Gemüse, Blumen und dergleichen, mit
- einem Gehäuse (2) mit einer Vorderwand (4) und einer Rückwand (5), wobei die Vorderwand (4) zumindest teilweise transparent ausgebildet ist,
- einer innerhalb des Gehäuses angeordneten regalartigen Aufnahmeeinrichtung (20) für die Pflanzen (25), wobei die Pflanzen (25) in Aufnahmen (24) gehalten und durch den transparenten Bereich der Vorderwand (4) sichtbar sind,
- einer Bedieneinrichtung (19) zum Auswählen und Bezahlen der ausgewählten Pflanze (25),
- einer Ausgabeeinrichtung (29) zur Entnahme der ausgewählten Pflanze (25) aus dem Automat (1),
- einer Positioniereinrichtung (28) zur Entnahme der ausgewählten Pflanze (25) aus der Aufnahmeeinrichtung (20) und Ablage der Pflanze (25) in der Ausgabeeinrichtung (29), und
- einer Steuerungseinrichtung zur Verarbeitung der Daten aus der Bedieneinrichtung sowie Steuerung der Positioniereinrichtung (28) und Ausgabeeinrichtung (29),
**dadurch gekennzeichnet, dass** die Aufnahmeeinheit mindestens eine Kulturrinne nach einem der Ansprüche 1 bis 12 aufweist.

14. Anlage zur Anzucht von Pflanzen (25), insbesondere Nutz- und Zierpflanzen wie Salate, Gemüse, Blumen und dergleichen, **dadurch gekennzeichnet, dass** die Anlage mindestens eine Kulturrinne nach einem der Ansprüche 1 bis 12 aufweist.

## Claims

1. Cultivation gutter for receiving and cultivating plants (25), in particular crop plants or ornamental plants such as lettuce, vegetables, flowers and the like, comprising a holding base (68) in which at least one receptacle (24) for holding one plant (25) is arranged, the cultivation gutter being designed to be open along one longitudinal side such that the receptacles (24) are accessible via the open longitudinal side, an irrigation tray (90) being arranged below the holding base (68), **characterized in that** the open longitudinal side extends between the free longitudinal edge of the holding base (68) and free longitudinal edge of the irrigation tray (90).

2. Cultivation gutter according to claim 1, **characterized in that** a collection tray (69) is arranged below the holding base (68).

3. Cultivation gutter according to claim 2, **characterized in that** the irrigation tray (90) simultaneously forms the collection tray (69).

4. Cultivation gutter according to any of claims 1 to 3, **characterized in that** the holding base (68) and/or the irrigation tray (90) and/or the collection tray (69) are interconnected along one of their longitudinal edges via a connecting piece (67) and the opposite longitudinal edges form the open longitudinal side.

5. Cultivation gutter according to claim 4, **characterized in that** the holding base (68) and/or the irrigation tray (90) and/or the collection tray (69) form a gutter together with the connecting piece (67).

6. Cultivation gutter according to any of claims 2 to 5, **characterized in that** the collection tray (69) is wider than the holding base (68) and the free longitudinal edge of the collection tray (69) projects beyond the free longitudinal edge of the holding base (68).

7. Cultivation gutter according to any of claims 2 to 6, **characterized in that** the irrigation tray (90) and/or collection tray (69) are formed in the manner of a tub or trough.

8. Cultivation gutter according to any of claims 1 to 7, **characterized in that** the receptacles (24) in the holding base (68) are formed by recesses in the holding base (68), preferably by edge recesses (71) which originate from the free longitudinal edge of the holding base (68).

9. Cultivation gutter according to claim 8, **characterized in that** the recesses have a rectangular or round shape.

10. Cultivation gutter according to either claim 8 or claim 9, **characterized in that** the sides and/or the bottom of the edge recesses (71) have a contact bar (74) for the plant (25) to rest on.

11. Cultivation gutter according to any of claims 8 to 10, **characterized in that** the edge recesses (71", 71‴) widen towards their bottom (73", 73‴) and/or in the transition to the free longitudinal edge of the holding base (68).

12. Cultivation gutter according to any of claims 8 to 11, **characterized in that** the receptacles (24) are formed by insert parts (75) which are inserted into the recesses.

13. Vending machine for selling plants (25), in particular crop plants and ornamental plants such as salads, vegetables, flowers and the like, comprising
- a housing (2) having a front wall (4) and a rear wall (5), the front wall (4) being at least partially transparent,
- a shelf-like receiving device (20) for the plants (25) which is arranged within the housing, the plants (25) being held in receptacles (24) and being visible through the transparent region of the front wall (4),
- an operating device (19) for selecting and paying for the selected plant (25),
- a dispensing device (29) for removing the selected plant (25) from the machine (1),
- a positioning device (28) for removing the selected plant (25) from the receiving device (20) and placing the plant (25) in the dispensing device (29), and
- a control device for processing the data from the operating device and for controlling the positioning device (28) and dispensing device (29),
**characterized in that** the receiving unit has at least one cultivation gutter according to any of claims 1 to 12.

14. System for cultivating plants (25), in particular crop plants and ornamental plants such as salads, vegetables, flowers and the like, **characterized in that** the system has at least one cultivation gutter according to any of claims 1 to 12.

## Revendications

1. Gouttière de culture permettant de recevoir et de faire pousser des plantes (25), en particulier des plantes utiles ou ornementales telles que des salades, des légumes, des fleurs et similaires, comportant un fond de maintien (68) dans lequel est disposé au moins un réceptacle (24) permettant de maintenir respectivement une plante (25), la gouttière de culture étant conçue de manière à être ouverte le long d'un côté longitudinal de telle sorte que les réceptacles (24) sont accessibles depuis le côté longitudinal ouvert, un fond d'irrigation (90) étant disposé sous le fond de maintien (68), **caractérisée en ce que** le côté longitudinal ouvert s'étend entre le bord longitudinal libre du fond de maintien (68) et le bord longitudinal libre du fond d'irrigation (90).

2. Gouttière de culture selon la revendication 1, **caractérisée en ce qu'**un fond de collecte (69) est disposé sous le fond de maintien (68).

3. Gouttière de culture selon la revendication 2, **caractérisée en ce que** le fond d'irrigation (90) forme simultanément le fond de collecte (69).

4. Gouttière de culture selon l'une des revendications 1 à 3, **caractérisée en ce que** le fond de maintien (68) et/ou le fond d'irrigation (90) et/ou le fond de collecte (69) sont reliés les uns aux autres le long d'un de leurs bords longitudinaux par l'intermédiaire d'une nervure (67) et les bords longitudinaux opposés forment le côté longitudinal ouvert.

5. Gouttière de culture selon la revendication 4, **caractérisée en ce que** le fond de maintien (68) et/ou le fond d'irrigation (90) et/ou le fond de collecte (69) forment une rigole avec la nervure (67).

6. Gouttière de culture selon l'une des revendications 2 à 5, **caractérisée en ce que** le fond de collecte (69) est plus large que le fond de maintien (68) et le fond de collecte (69) fait saillie avec son bord longitudinal libre depuis le bord longitudinal libre du fond de maintien (68).

7. Gouttière de culture selon l'une des revendications 2 à 6, **caractérisée en ce que** le fond d'irrigation (90) et/ou le fond de collecte (69) sont conçus à la manière d'une auge ou d'un bac.

8. Gouttière de culture selon l'une des revendications 1 à 7, **caractérisée en ce que** les réceptacles (24) dans le fond de maintien (68) sont formés par des évidements dans le fond de maintien (68), de préférence par des évidements de bord (71) qui partent du bord longitudinal libre du fond de maintien (68).

9. Gouttière de culture selon la revendication 8, **caractérisée en ce que** les évidements possèdent une forme rectangulaire ou ronde.

10. Gouttière de culture selon la revendication 8 ou 9, **caractérisée en ce que** les côtés et/ou la base des évidements de bord (71) présentent une nervure d'installation (74) pour l'installation de la plante (25).

11. Gouttière de culture selon l'une des revendications 8 à 10, **caractérisée en ce que** les évidements de bord (71", 71‴) s'élargissent vers leur base (73", 73‴) et/ou dans la transition vers le bord longitudinal libre du fond de maintien (68).

12. Gouttière de culture selon l'une des revendications 8 à 11, **caractérisée en ce que** les réceptacles (24) sont formés par des pièces d'insertion (75) qui sont insérées dans les évidements.

13. Distributeur automatique permettant la vente de plantes (25), en particulier de plantes utiles et ornementales telles que des salades, des légumes, des fleurs et similaires, comportant
- un boîtier (2) comportant une paroi avant (4) et une paroi arrière (5), la paroi avant (4) étant au moins partiellement transparente,
- un dispositif de réception en forme d'étagère (20) pour les plantes (25) disposé à l'intérieur du boîtier, les plantes (25) étant maintenues dans des réceptacles (24) et étant visibles à travers la zone transparente de la paroi avant (4),
- un dispositif de commande (19) permettant de sélectionner et de payer la plante (25) sélectionnée,
- un dispositif de distribution (29) permettant de retirer la plante (25) sélectionnée hors du distributeur automatique (1),
- un dispositif de positionnement (28) permettant de retirer la plante (25) sélectionnée hors du dispositif de réception (20) et de déposer la plante (25) dans le dispositif de distribution (29), et
- un dispositif de contrôle permettant de traiter les données du dispositif de commande et de commander le dispositif de positionnement (28) et le dispositif de distribution (29), **caractérisé en ce que** l'unité de réception présente au moins une gouttière de culture selon l'une des revendications 1 à 12.

14. Installation permettant de faire pousser de plantes (25), en particulier des plantes utiles et ornementales telles que des salades, des légumes, des fleurs et similaires, **caractérisée en ce que** l'installation présente au moins une gouttière de culture selon l'une des revendications 1 à 12.
